**Europäisches Patentamt**

**European Patent Office**

**Office européen des brevets**

(19)

(11) Veröffentlichungsnummer: **0 086 851**

**A1**

# (12) EUROPÄISCHE PATENTANMELDUNG

(21) Anmeldenummer: **82101201.0**

(22) Anmeldetag: **18.02.82**

(51) Int. Cl.³: **G 06 F 7/50**
**G 06 F 7/48**

(43) Veröffentlichungstag der Anmeldung:
**31.08.83 Patentblatt 83/35**

(84) Benannte Vertragsstaaten:
**DE FR GB IT NL**

(71) Anmelder: **Deutsche ITT Industries GmbH**
**Hans-Bunte-Strasse 19 Postfach 840**
**D-7800 Freiburg(DE)**

(84) Benannte Vertragsstaaten:
**DE**

(71) Anmelder: **ITT INDUSTRIES INC.**
**320 Park Avenue**
**New York, NY 10022(US)**

(84) Benannte Vertragsstaaten:
**FR GB IT NL**

(72) Erfinder: **Nopper, Guido H.**
**Schauinslandstrasse 8**
**D-7801 Umkirch(DE)**

(74) Vertreter: **Stutzer, Gerhard, Dr.**
**Deutsche ITT Industries GmbH Patent- und**
**Lizenzabteilung Hans-Bunte-Strasse 19 Postfach 840**
**D-7800 Freiburg(DE)**

(54) Überlaufdetektor für algebraische Addierwerke.

(57) Ein in MOS-Technik realisierter, schneller Überlaufdetektor für algebraische Addierwerke, die zwei Binärzahlen (a, b) in Zweier-Komplement-Darstellung addieren und pro Stelle einen Volladdierer enthalten, der ein Summen- und ein Übertragssignal (s, c) abgibt, besteht aus einem Komplexgatter (k) aus drei UND-Gliedern (u1, u2, u3) mit je zwei Eingängen. Die Ausgänge der drei UND-Glieder sind dabei NOR-verknüpft. Den beiden Eingängen des ersten UND-Gliedes (u1) ist das Vorzeichensignal (va) der ersten Binärzahl (a) bzw. das invertierte Vorzeichensignal $\overline{vb}$ der zweiten Binärzahl (b) zugefürt. Den beiden Eingängen des zweiten UND-Gliedes (u2) sind das Vorzeichensignal $\overline{vb}$ der zweiten Binärzahl (b) bzw. das Summensignal (vs) des Volladdierers (av) der Vorzeichenstelle zugeführt. Den beiden Eingängen des dritten UND-Glieds (u3) ist sowohl das invertierte Summensignal $\overline{vs}$ wie das invertierte Vorzeichensignal $\overline{va}$ der ersten Binärzahl (a) zugeführt.

FIG. 1

EP 0 086 851 A1

0086851

G.H. Nopper-2

Fl 1129 EP

Dr.Rl/bk

15. Februar 1982

Überlaufedetektor für algebraische Addierwerke

Die Erfindung betrifft einen Überlaufdetektor für algebraische Addierwerke nach dem Oberbegriff des Anspruchs 1.

Beim Rechnen mit algebraischen, d.h. positiven und negativen Binärzahlen ist es üblich, daß diese neben der ihrer Wertigkeit entsprechenden Stellenzahl noch eine weitere Vorzeichenstelle enthalten, deren Binärziffer die Eigenschaft positiv oder negativ festlegt. Üblicherweise werden dabei positive Binärzahlen mit der Ziffer 0, negative mit der Ziffer 1 in der Vorzeichenstelle geschrieben. Da in der Algebra zwischen den Rechenvorschriften Addition und Subtraktion nicht unterschieden wird, sondern lediglich die eine Rechenvorschrift Addition, angewendet auf positive und negative Zahlen, besteht, werden negative Binärzahlen unter anderem in der Zweikomplement-Darstellung angegeben und addiert; dadurch wird ein mögliches Schalten des Addierwerks auf Subtraktion vermieden und der erforderliche Schaltungsaufwand vereinfacht. Die Subtraktion wird also dadurch erreicht, daß mittels desselben Volladdierers wie bei der Addition das Zweierkomplement der zu subtrahierenden Zahl addiert wird.

Werden nun zwei Zahlen mit dem gleichen Vorzeichen addiert, so kann es zum Überschreiten des Zahlenbereichs und zu einem ungültigen Ergebnis kommen. Sind die zu addierenden Zahlen positiv, so wird auch die Summe positiv. Tritt jedoch dabei in der Vorzeichenstelle anstatt richtigerweise einer Null eine Eins auf, die das Ergebnis fälschlicherweise als negative Zahl erscheinen läßt, so liegt ein "positiver" Überlauf vor.

Bei zwei negativen Summanden ist auch das Ergebnis negativ; das Auftreten einer Null in der Vorzeichenstelle anstatt einer Eins kennzeichnet einen "negativen" Überlauf .

Die jeweils falsche Ziffer ist durch das aus dem Volladdierer der höchstwertigen Stelle kommende Übertragsignal c bedingt. In beiden Überlauffällen ergibt sich durch den (falschen) Signalwechsel in der Vorzeichenstelle nicht nur ein falsches Vorzeichen, sondern die gesamte Ergebniszahl wird falsch, da zum Beispiel eine an sich positive Zahl, nun mit (falschem) negativem Vorzeichen behaftet, auch einen falschen Zahlenwert hat.

Nach dem Buch von U.Tietze, Ch.Schenk, "Halbleiterschaltungstechnik" 5. Auflage, Springer-Verlag Berlin, Heidelberg New York 1980, Seite 482 gilt für das Überlaufsignal fl die folgende Gleichung

$$fl = \overline{va} \cdot \overline{vb} \cdot vs + va \cdot vb \cdot \overline{vs}$$

Ein Überlaufdetektor, der entsprechend dieser Gleichung in MOS-Technik realisiert wird, besteht aus einem Komplexgatter mit zwei NOR-verknüpften UND-Gliedern mit je drei Eingängen und aus einem nachgeschalteten Inverter. Eine solche Schaltung ist langsam, da die Verzögerungszeit durch zwei signalflußmäßig hintereinandergeschaltete Gatter bestimmt ist.

Die in den Ansprüchen gekennzeichnete Erfindung löst daher die Aufgabe, eine einfachere und schnellere Schaltung anzugeben.

Ein Vorteil der Erfindung ergibt sich unmittelbar aus der Aufgabenlösung; die Geschwindigkeit der Überlaufsignalbildung ist praktisch doppelt so groß wie bei einer Anordnung nach dem bekannten Stand der Technik. Ein weiterer Vorteil liegt in dem einfacheren Layout der Schaltung.

Die Erfindung wird nun anhand der Figuren der Zeichnung näher erläutert.

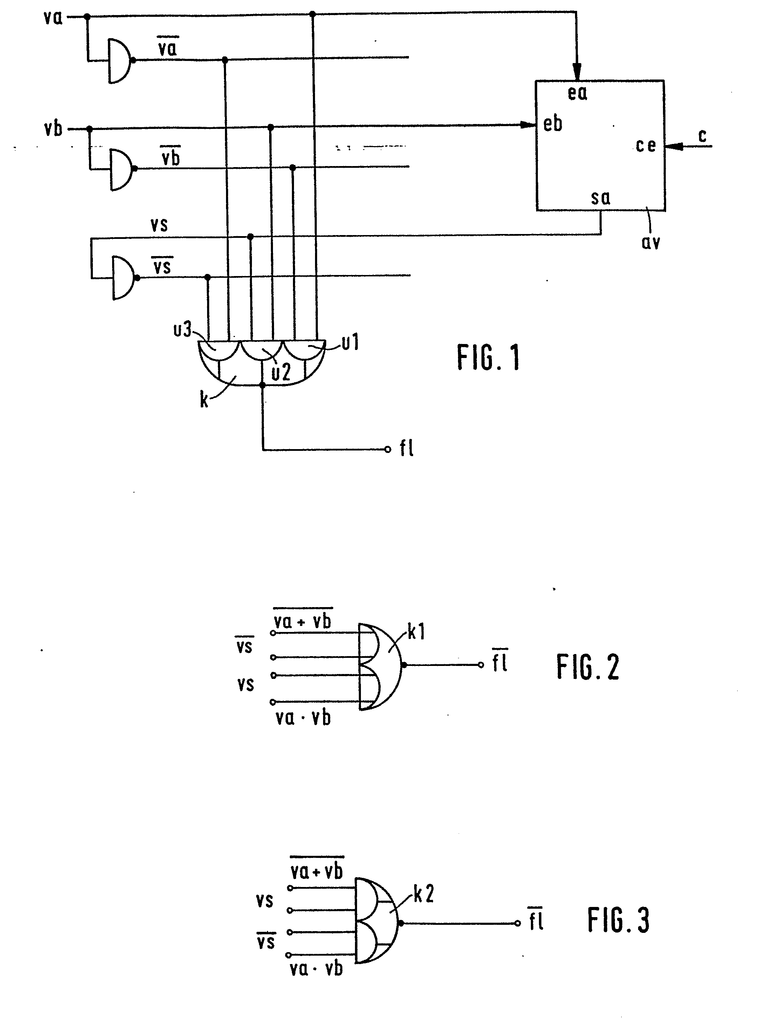

Fig. 1    zeigt das Schaltbild eines Ausführungsbeispiels der Erfindung,

Fig. 2 und 3
          zeigen Schaltbilder vereinfachter Überlaufdetektoren für eine spezielle Art von Addierwerken.

Im Ausführungsbeispiel der Fig.1. besteht das Komplex-Gatter k aus drei UND-Gliedern u1, u2, u3, deren Ausgänge, NOR-verknüpft sind. Die einzelnen UND-Glieder besitzen je zwei Eingänge. An den Eingängen des ersten UND-Gliedes u1 liegt das Vorzeichensignal va der ersten zu addierenden Binärzahl a bzw. das invertierte Vorzeichensignal $\overline{vb}$ der zweiten zu addierenden Binärzahl b. Den beiden Eingängen des zweiten UND-Glieds u2 ist das Vorzeichensignal vb der zweiten Binärzahl b bzw. das Summensignal vs des Volladdierers av der Vorzeichenstelle zugeführt, das an dessen Summenausgang sa entsteht. An den Eingängen ea, eb des Volladdierers av liegen die erwähnten Vorzeichensignale va, vb. Am Übertragseingang ce liegt das Übertragsignal c des nicht gezeichneten Volladdierers der höchstwertigen Stelle. Die zu den Signalen va, vb, vs invertierten Signale werden mittels der gezeichneten Inverter erzeugt. An den beiden Eingängen des dritten UND-Gliedes u3 liegt das invertierte Summensignal $\overline{vs}$ bzw. das invertierte Vorzeichensignal $\overline{va}$

der ersten Binärzahl a. Am Ausgang des Komplex-Gatters k tritt das Überlaufsignal fl nichtinvertiert auf.

In den Fig. 2 und 3 sind vereinfachte Überlaufdetektoren gezeigt, die für spezielle Addierwerke geeignet sind und zwar für Addierwerke, die bei positiver Logik die Signale va · vb, $\overline{va + vb}$, vs, $\overline{vs}$ liefern.

Solche Addierwerke sind aus der eigenen älteren europäischen Anmeldung 81 10 6668.7 bekannt. Die Signale va · vb, $\overline{va + vb}$ entstehen dort am NOR-Gatter 7i oder 8j bzw. 8i oder 7j. Je nach dem, ob ein Volladdierer nach Stufe i oder nach Stufe j in der Vorzeichenstelle des Addierwerks der Erfindung benutzt wird, sind die Signale va · vb, $\overline{va + vb}$ entsprechend abzugreifen. Das Signal vs entsteht in beiden Stufen i, j, und es ist zur Bildung des Signals $\overline{vs}$ ein Inverter vorzusehen.

Die Figur 2 zeigt das Komplex-Gatter k1, das aus zwei NAND-verknüpften ODER-Gliedern mit je zwei Eingängen besteht und an dessen Ausgang das invertierte Überlaufsignal $\overline{fl}$ entsteht. Beim Komplexgatter k1 nach Fig. 2 sind die Signale $\overline{va + vb}$ und $\overline{vs}$ dem einen ODER-Glied und die Signale vs und va · vb dem anderen ODER-Glied zugeführt.

Das Komplex-Gatter k2 nach Fig. 3 besteht aus zwei NOR-verknüpften UND-Gliedern mit je zwei Eingängen und liefert das invertierte Überlaufsignal $\overline{fl}$. Die Signale va· vb und $\overline{vs}$ sind dem einen ODER-Glied und die Signale vs und $\overline{va + vb}$ dem anderen ODER-Glied zugeführt.

Es sei noch darauf verwiesen, daß mit  ..... Gatter  solche
logischen Schaltungen bezeichnet sind, die einen Arbeitswiderstand aufweisen. In den Figuren sind das solche Schaltsymbole, deren Ausgangsleitung am Berührungspunkt mit
dem Halbkreis des Symbols den zur Darstellung einer Invertierung üblichen Punkt aufweisen. Für die Zwecke der vorliegenden Beschreibung wurde daher auch zwischen einem
.... Gatter, das eine derartige Schaltung mit einem einzigen Arbeitswiderstand ist, und einem ....Glied unterschieden, das lediglich Teil eines .... Gatters ist und
keinen eigenen Arbeitswiderstand hat.

G.H.Nopper-2

Fl 1129 EP
Dr.Rl/bk
15. Februar 1982

## Patentansprüche

1. In Isolierschicht-Feldeffekttransistor-Technik (MOS-Technik) integrierter Überlaufdetektor für algebraische Addierwerke, die zwei Binärzahlen (a, b) in Zweier-komplement-Darstellung addieren und pro Stelle einen Volladdierer enthalten, der ein Summen- und ein Übertragssignal gekennzeichnet durch,

   - ein Komplex-Gatter (k) aus drei UND-Gliedern (u1, u2, u3) mit je zwei Eingängen, wobei
   - die Ausgänge der drei UND-Glieder NOR-verknüpft sind,
   - den beiden Eingängen des ersten UND-Glieds (u1) das Vorzeichensignal (va) der ersten Binärzahl (a) bzw. das invertierte Vorzeichensignal ($\overline{vb}$) der zweiten Binärzahl (b),
   - den beiden Eingängen des zweiten UND-Glieds (u2) das Vorzeichensignal (vb) der zweiten Binärzahl (b) bzw. das Summensignal (vs) des Volladdierers (av) der Vorzeichenstelle und
   - den beiden Eingängen des dritten UND-Glieds (u3) das invertierte Summensignal ($\overline{vs}$) bzw. das invertierte Vorzeichensignal ($\overline{va}$) der ersten Binärzahl (a) zugeführt ist.

2. Überlaufdetektor nach Anspruch 1 für Addierwerke, an deren Volladdierer (av) der Vorzeichenstelle bei positiver Logik die Signale va · vb, $\overline{va + vb}$ , vs, $\overline{vs}$ auftreten, gekennzeichnet durch

G.H.Nopper-2                                    Fl 1129 EP

- ein Komplex-Gatter (k1) aus zwei je zwei Eingänge
  aufweisenden ODER-Gliedern, deren Ausgänge NAND-verknüpft sind, wobei die Signale $\overline{va + vb}$ und $\overline{vs}$ dem
  einen ODER-Glied bzw. die Signale $va \cdot vb$ und $vs$
  dem anderen ODER-Glied zugeführt sind, oder
- ein Komplex-Gatter (k2) aus zwei je zwei Eingänge
  aufweisenden UND-Gliedern, deren Ausgänge NOR-verknüpft sind, wobei die Signale $\overline{va + vb}$ und $vs$ dem
  einen UND-Glied bzw. die Signale $va \cdot vb$ und $\overline{vs}$ dem
  anderen UND-Glied zugeführt sind.

FIG.1

FIG.2

FIG.3

Europäisches
Patentamt

EUROPÄISCHER RECHERCHENBERICHT

0086851
Nummer der Anmeldung

EP 82 10 1201

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | COMPUTER DESIGN, Band 18, Nr. 7, Juli 1979, Seiten 105-112, Concord (USA); T..V.NGUYEN: "Practical hardware solution for 2's complement arithmetic problems". *Figur 4; Seite 109, linke Spalte* | 1 | G 06 F 7/50 G 06 F 7/48 |
| | --- | | |
| A | IBM TECHNICAL DISCLOSURE BULLETIN, Band 19, Nr. 8, Januar 1977, Seiten 3135-3136, Armonk (USA); D.G.EAST et al.: "Overflow indication in two's complement arithmetic". *Sämtlicher Artikel* | 1 | |
| | --- | | |
| A | US-A-3 016 193 (IBM) | 1 | |
| | ----- | | RECHERCHIERTE SACHGEBIETE (Int. Cl. 3) |
| | | | G 06 F 7/50 G 06 F 7/48 |

Der vorliegende Recherchenbericht wurde für alle Patentansprüche erstellt.

| Recherchenort | Abschlußdatum der Recherche | Prüfer |
|---|---|---|
| DEN HAAG | 20-10-1982 | FORLEN G.A. |